Europäisches Patentamt

**European Patent Office**

**Office européen des brevets**

(11) Veröffentlichungsnummer : **0 020 915**
**B1**

(12) **EUROPÄISCHE PATENTSCHRIFT**

(45) Veröffentlichungstag der Patentschrift :
26.01.83

(51) Int. Cl.³ : **B 29 C 27/02**

(21) Anmeldenummer : **80102097.5**

(22) Anmeldetag : **18.04.80**

(54) Verfahren zum nahtlosen Verbinden von thermoplastischen Kunststoffhöhlprofilen und Vorrichtung zur Durchführung des Verfahrens.

(30) Priorität : 08.06.79 DE 2923205

(43) Veröffentlichungstag der Anmeldung :
07.01.81 Patentblatt 81/01

(45) Bekanntmachung des Hinweises auf die Patenterteilung : 26.01.83 Patentblatt 83/04

(84) Benannte Vertragsstaaten :
AT CH FR GB IT NL

(56) Entgegenhaltungen :
CH A 455 254
DE A 2 264 687
DE A 2 316 500
DE A 2 633 141
US A 3 035 958

(73) Patentinhaber : CHEMISCHE WERKE HÜLS AG
Postfach 1320
D-4370 Marl 1 (DE)

(72) Erfinder : Zimmermann, Johannes
Max-Planck-Strasse 4
D-4370 Marl (DE)
Erfinder : Artmeyer, Siegfried, Dr.
Emslandstrasse 1
D-4370 Marl (DE)

Verfahren zum nahtlosen Verbinden von thermoplastischen Kunststoffhohlprofilen und Vorrichtung zur Durchführung des Verfahrens

Es ist bekannt, thermoplastische Kunststoffhohlprofile, insbesondere Rohre, durch Stumpfschweißen zu verbinden. Die bekannten Verfahren arbeiten alle nach dem Prinzip, daß die Stirnfläche des Profils erwärmt und damit plastifiziert wird. Anschließend werden die so erwärmten und plastifizierten Stirnflächen zusammengestoßen und damit verschmolzen. Diese Verfahren haben alle den Nachteil, daß an der Schweißnaht Schweißwulste sowohl außen als auch im Innern des Profils auftreten. Derartige Schweißwulste sind vor allem bei Getränkeleitungen unerwünscht, da an diesen Stellen leicht Ablagerungen stattfinden und die Leitungen sich auch wesentlich schwerer reinigen lassen. Aus der DE-A-23 16 500 ist bekannt, daß man die Schweißwulste abklemmen kann. Eine solche Arbeitsweise kann nicht befriedigen, da zur Erzielung glatter Oberflächen die Schweißstellen nachbearbeitet werden müssen. Auf das Profilinnere ist dieses Verfahren überhaupt nicht anwendbar.

Aus der DE-A-26 33 141 ist ein Verfahren bekannt, bei dem man einen Hohlkörper im Innern des Hohlprofils anbringt. Nach dem Erwärmen der Profilstirnflächen werden diese zusammengestaucht. Mittels beiderseits des Hohlkörpers im Inneren ebenfalls angebrachter Absperrvorrichtungen ist es möglich, in diesem Bereich einen Unterdruck zu erzeugen, durch den das Profil über den ganzen Umfang auf dem etwas kleiner dimensionierten Hohlkörper zum Anliegen gebracht werden soll. Nach Beendigung der Verschweißung werden die Profilstücke etwas auseinandergezogen, wodurch die beim Zusammenstauchen eingetretene Verdickung wieder verringert werden soll. Außerdem wird zur Herstellung des ursprünglichen Profildurchmessers und als Voraussetzung zur Entfernung des Hohlkörpers und der Absperrvorrichtungen durch Überdruck das Profil wieder aufgeweitet. Die vorhandenen Außenschweißwulste müssen nachträglich abgearbeitet bzw. geglättet werden.

Aus der CH-A-455 254 ist ein Verfahren zum nahtlosen Verbinden von thermoplastischen Kunststoffhohlprofilen durch Plastifizieren der auf Stoß eingespannten, zu verbindenden Profilendstücke bekannt, wobei unter Verwenden einer die Endstücke vollständig umschließenden Außenform und einer im Innern der Hohlprofile verschiebbaren Stützvorrichtung gearbeitet wird.

Nach dieser Arbeitsweise ist es sowohl erforderlich, die Profilenden vorzuwärmen, ehe sie in die Form eingespannt werden, als auch anschließend einen erheblichen Preßdruck zum Zusammenstauchen der Profilstücke aufzuwenden. Das Verfahren des Standes der Technik ist nur zum Verbinden von kurzen Rohrstücken geeignet, wobei eine erhebliche Längenverkürzung durch das Zusammenstauchen auftritt. Außerdem ist ein Nacharbeiten der Verbindungsnaht erforderlich, da die beim Stauchen an der Verbindungsnaht austretende Masse auf der Oberfläche des Hohlprofils ungleichmäßig verteilt wird.

Aufgabe der Erfindung ist es, ein einfach handhabbares Verfahren zum nahtlosen Verbinden von thermoplastischen Kunststoffhohlprofilen bereitzustellen, wobei durch Plastifizieren der auf Stoß eingespannten zu verbindenden Profilendstücke diese unter Verwendung einer die Endstücke vollständig umschließenden Außenform und einer im Innern der Hohlprofile verschiebbaren Stützvorrichtung verbunden werden, und welches auf einfache Weise erlaubt, nahtlose und schweißwulstlose Verbindungen von Hohlprofilen herzustellen, wobei sowohl im Innern als auch außen keine Schweißwülste auftreten und demnach eine Nachbehandlung und eine Längenänderung der Profile vermieden wird.

Die Lösung der Aufgabe gelingt, wenn man die zu verbindenden, auf Stoß eingespannten Endstücke der Hohlprofile mittels einer beheiz- und teilbaren, die Profilendstücke vollkommen umschließenden Außenform plastifiziert und gleichzeitig eine Volumen veränderbare, unter Überdruck gehaltene Stützvorrichtung einbringt, die sich glatt an die Innenwand der Hohlprofile anlegt.

Insbesondere ist die Arbeitsweise geeignet bei Einkammerprofilen, besonders Rohren. Die äußere, das Profil umschließende Form besteht vorteilhaft aus mindestens zwei Metallhalbschalen, die beheizbar sind. Insbesondere werden diese Halbschalen so eingerichtet, daß der innere Teil zur Stoßnaht beheizbar ist und der äußere Teil an beiden Enden, jeweils in Längsrichtung des Profils betrachtet, mit Kühlkammern ausgerüstet ist. Diese das Profil vollkommen umschließende Form erlaubt das vollkommene Durchplastifizieren der eingespannten Endstücke. Als zweiter notwendiger Teil befindet sich im Innern des Hohlprofils eine in ihrem Volumen veränderbare Stützvorrichtung, die sich glatt an die Innenfläche des Hohlprofils anlegt, beispielsweise ein aufblasbarer Gummibalg mit nichthaftender Oberfläche.

Die Profilenden werden demnach von außen beheizt und durchplastifiziert, durch die vorhandene Kühlzone bleiben jedoch die weiter abliegenden Profilteile starr. Der durch die Wärmeausdehnung auftretende Druck verbindet die Profilenden homogen. Nach dem Erkalten und Entformen liegt eine glatte nahtlose Verbindung vor, sowohl im Innern des Profils als auch auf der Außenfläche.

Als Vorteile gegenüber dem Stand der Technik sind z.B. zu nennen :

a) Es ist eine einfachere, leichte, transportable Einspannvorrichtung ohne verfahrbare Teile verwendbar

b) Nachdem in Vorversuchen die erforderlichen Heiz- und Kühlleistungen bzw. -zeiten ermittelt worden sind, ist nach dem Einrichten der Schweißstelle ein automatischer Ablauf ohne weitere Handgriffe gegeben

c) Auch bei Querschnittsabweichungen der Fügeteile tritt kein Versatz an den Stoßstellen auf. Eine bei Rohren gegebenenfalls vorhandene Ovalität wird ohne zusätzliche Maßnahmen ausgeglichen

d) Die Ausgangslänge der Fügeteile bleibt genau erhalten

e) Ein Nacharbeiten der Schweißstelle ist nicht erforderlich

f) Infolge der außen und innen nahtlosen, glatten Verbindung ergeben sich bei Rohrleitungen keine Durchflußbehinderungen und problemlose Reinigungsmöglichkeiten

g) Das Verfahren ist bei Reparaturarbeiten an bestehenden Leitungen oder beim Verbinden gekrümmter Profile, z.B. Rohrbogen, ebenfalls verwendbar, da die innere Stützvorrichtung auch hier problemlos eingeführt werden kann

h) Festigkeitsmindernde Verunreinigungen in der Schweißnaht werden vermieden, wie sie beim Heizelementschweißen durch verbleibende Rückstände am Heizelement oder beim Warmgasschweißen durch thermischoxidativen Abbau auftreten können.

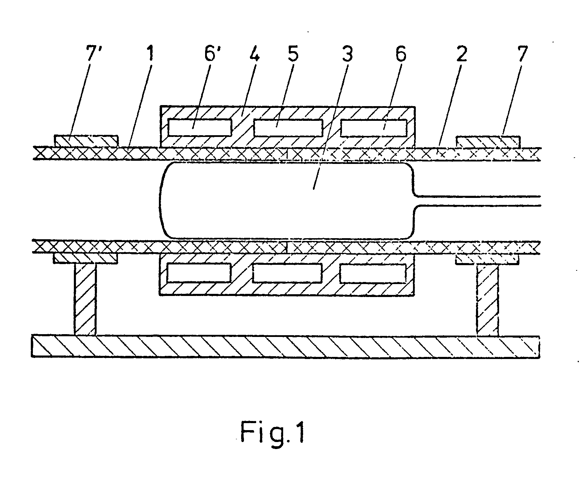

Anhand der Fig. 1, die schematisch einen Längsschnitt der Vorrichtung in einer Ausführungsform zeigt, wird das Verfahren am Beispiel der Verschweißung von Rohren beschrieben.

Die an den Enden senkrecht abgeschnittenen Rohrstücke (1) und (2) werden auf Stoß in einer beliebig gestalteten Einspannvorrichtung fixiert. Sie kann im einfachsten Fall aus zwei auf einem gemeinsamen Rahmen montierten, prismenförmigen Auflagen bestehen, auf denen die Rohrstücke mit Spannringen (7) und (7') befestigt werden. Vorteilhaft ist eine leichte Bauweise, die die Handhabung ohne weitere Hilfsmittel auch bei freihängenden Rohrleitungen erlaubt. Zentriervorrichtungen zum Ausrichten der Rohrstücke sind nicht erforderlich.

Die innere Stützvorrichtung (3), in der Zeichnung als Gummibalg dargestellt, wird entweder beim Einspannen der Rohrstücke eingebracht oder nachträglich mit einer geeigneten Vorrichtung an die Verbindungsstelle eingeschoben. Der Durchmesser ist so ausgelegt, daß auch bei Krümmungen der Rohrleitung und großen Längen ein bequemes Einführen möglich ist. Über einen angesetzten kurzen Druckluftschlauch, der über ein Kupplungsventil mit einem flexiblen Rohr beliebiger Länge verbunden werden kann, kann der Durchmesser des Gummibalgs durch Aufgeben eines Druckmediums, z.B. Wasser oder Luft, mindestens bis zur Größe des Rohrinnendurchmessers aufgeweitet werden. Das angekuppelte Rohr dient zum Einführen und Herausziehen des Gummibalgs und gleichzeitig als Druckmittelzuführung. Die beliebig ausgeführten Druckerzeuger und mögliche Meß- und Regeleinrichtungen sind in der Zeichnung weggelassen. Bei Aufgabe des Innendruckes ist es unter Umständen nützlich, wenn der Gummibalg keine Längenausdehnung erfährt. Dies kann gegebenenfalls durch eine entsprechende Ausführung mit Gewebeeinlagen oder andere Maßnahmen, z.B. das Anbringen von stirnseitigen Verstärkungsplatten, die über durch das Innere gehende Zuganker verbunden sind, erreicht werden.

Die geteilte Außenform (4) besteht aus zwei dem Rohraußendurchmesser angepaßten Halbschalen, die über geeignete Vorrichtungen, z.B. Schnellspannverschlüsse verbunden, kraftschlüssig um die Rohrenden gelegt werden. Durch die Ausführung in Messing o.ä. wird eine gute Wärmeleitfähigkeit erreicht. Die mittlere Kammer (5) enthält vorzugsweise elektrische Heizelemente. Die äußeren Kühlkammern (6) und (6') sind zum Durchleiten eines Kühlmediums, z.B. Wasser oder Luft, eingerichtet. In der Zeichnung sind die elektrischen und Kühlmittelanschlüsse sowie die üblicherweise verwendeten Meß- und Regeleinrichtungen weggelassen. Die Kammern (6') und (6) können von kammer (5) gegebenenfalls durch eine nicht eingezeichnete Wärmeisolierschicht getrennt sein.

In Vorversuchen wird der erforderliche Innendruck, der während des gesamten Schweißvorganges aufrechterhalten wird, bestimmt. Ebenso wird die benötigte Heizleistung (variabel in Spannungshöhe und Zeitdauer) und Kühlleistung (Durchflußmenge und -dauer) ermittelt. Nach Zusammenbau der Form werden diese Größen von Hand aufgegeben oder auch die in einer Programmsteuerung eingestellten Parameter gestartet. Nach Ablauf der vorgegebenen Zeit kann die fertige Verbindungsstelle auf einfache Weise entformt werden.

**Ansprüche**

1. Verfahren zum nahtlosen Verbinden von thermoplastischen Kunststoffhohlprofilen (1, 2) durch Plastifizieren der auf Stoß eingespannten, zu verbindenden Profilendstücke, unter Verwendung einer die Endstücke vollständig umschließenden Außenform (4) und einer im Inneren der Hohlprofile (1, 2) verschiebbaren Stützvorrichtung (3), dadurch gekennzeichnet, daß man die zu verbindenden, auf Stoß eingespannten Endstücke der Hohlprofile (1, 2) mittels einer beheiz- und teilbaren Außenform (4) plastifiziert und gleichzeitig eine im Volumen veränderbare, unter Überdruck gehaltene Stützvorrichtung (3) einbringt, die sich glatt an die Innenwand der Hohlprofile (1, 2) anlegt.

2. Verfahren nach Anspruch 1, dadurch gekennzeichnet, daß die heiz- und teilbare Außenform (4) an den von der Schweißstelle abgewandten, in Profillängsrichtung liegenden Seiten mit Kühlkammern (6, 6') ausgerüstet ist.

3. Vorrichtung zur Durchführung des Verfahrens nach den Ansprüchen 1 und 2, die eine Einspannvorrichtung, eine an die Hohlprofilaußendurchmesser angepaßte Außenform (4) und eine verschiebbare, innere Stützvorrichtung (3) aufweist, dadurch gekennzeichnet, daß die aus zwei Halbschalen bestehende und verriegelbare Außenform (4) drei Kammern (5, 6, 6') aufweist, wobei die mittlere Kammer (5) für Heizzwecke und die beiden seitlich angeordneten Kammern (6, 6') für Kühlzwecke eingerichtet sind, daß entsprechende Meß- und Regelanordnungen vorgesehen sind und daß die innere Stützvorrichtung (3) im Volumen veränderbar ist und unter Überdruck gehalten werden kann und sich dabei an die Innenwand der Hohlprofile (1, 2) anlegt.

## Claims

1. A process for the seamless bonding of hollow thermoplastic profiles (1, 2) by plasticising the ends of the profiles which are to be bonded an which are clamped abuttingly, using an outer mould (4) which completely surrounds the ends and a supporting device (3) which is slidable in the interior of the hollow profiles (1, 2), characterised in that the ends, which are to be bonded and are clamped abuttingly, of the hollow profiles (1, 2) are plasticised by means of an outer mould (4) which can be heated and be split, and at the same time a supporting device (3) whose volume can be changed and which is kept under excess pressure is introduced, the said device resting smoothly against the inner wall of the hollow profiles (1, 2).

2. A process according to claim 1, characterised in that the outer mould (4) which can be heated and split is equipped with cooling chambers (6, 6') on the sides which face away from the weld and run in the lengthwise direction of the profiles.

3. Apparatus for carrying out a process according to claim 1 or 2, comprising a clamping device, an outer mould (4) which matches the external diameters of the hollow profiles, and a slidable internal supporting device (3), characterised in that the outer mould (4), which consists of two half-shells and is lockable, possesses three chambers (5, 6, 6'), the middle chamber (5) being equipped for heating purposes and the two lateral chambers (6, 6') being equipped for cooling purposes, that appropriates measuring and regulating arrangements are provided and that the internal supporting device (3) is of variable volume and can be kept under excess pressure, in which condition it rests agaitns the inner wall of the hollow profiles (1, 2).

## Revendications

1. Procédé pour l'assemblage sans soudure de profilés creux (1, 2) en matière synthétique thermoplastique, par plastification des tronçons terminaux de profilé à assembler, serrés bout à bout, avec utilisation d'un moule extérieur (4) enfermant complètement les tronçons terminaux et d'un dispositif de soutien (3) pouvant coulisser à l'intérieur des profilés creux (1, 2), caractérisé par le fait que l'on plastifie les tronçons terminaux serrés bout à bout des profilés creux (1, 2) au moyen d'un moule extérieur (4) pouvant être chauffé et divisé et qu'en même temps, on introduit un dispositif de soutien (3) à volume variable maintenu sous une surpression et qui s'applique exactement contre la paroi intérieure des profilés creux (1, 2).

2. Procédé selon la revendication 1, caractérisé par le fait que le moule extérieur (4) pouvant être chauffé et divisé est équipé de chambres de refroidissement (6, 6') sur les côtés opposés à la zone de soudage et situés dans la direction longitudinale des profilés.

3. Appareil pour la mise en œuvre du procédé selon les revendications 1 et 2, comportant un dispositif de serrage, un moule extérieur (4) adapté au diamètre extérieur des profilés creux et un dispositif intérieur de soutien coulissant (3), caractérisé par le fait que le moule extérieur (4), formé de deux demi-coquilles et pouvant être verrouillé, présente trois chambres (5, 6, 6'), la chambre centrale (5) étant agencée aux fins du chauffage et les deux chambres (6, 6'), disposées latéralement, aux fins du refroidissement, que des dispositifs correspondants de mesure et de réglage sont prévus et que le dispositif intérieur de soutien (3) est à volume variable et peut être maintenu sous une surpression et s'applique alors contre la paroi intérieure des profilés creux (1, 2).

Fig.1